(19) Europäisches Patentamt
European Patent Office
Office européen des brevets

(11) **EP 4 362 406 A2**

(12) **EUROPEAN PATENT APPLICATION**

(43) Date of publication:
**01.05.2024 Bulletin 2024/18**

(21) Application number: **24163937.6**

(22) Date of filing: **08.08.2019**

(51) International Patent Classification (IPC):
**H04L 25/02** $^{(2006.01)}$

(52) Cooperative Patent Classification (CPC):
**H04B 7/0456; H04L 5/0051; H04L 5/0053; H04L 5/0094; H04L 25/0224; H04W 4/70;** H04L 1/0606; H04L 5/0023; H04L 5/0057

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2018 US 201862717661 P**

(62) Document number(s) of the earlier application(s) in accordance with Art. 76 EPC:
**19847984.2 / 3 834 358**

(71) Applicant: **INTEL Corporation**
**Santa Clara, CA 95054 (US)**

(72) Inventors:
• **MOROZOV, Gregory V.**
**603163 Nizhny Novgorod (RU)**

• **YE, Qiaoyang**
**San Jose, CA 95134 (US)**
• **CHATTERJEE, Debdeep**
**San Jose, CA 95128 (US)**

(74) Representative: **HGF**
**HGF Limited**
**1 City Walk**
**Leeds LS11 9DX (GB)**

Remarks:
This application was filed on 15-03-2024 as a divisional application to the application mentioned under INID code 62.

(54) **ENABLING CELL-SPECIFIC REFERENCE SIGNALS (CRS) FOR MACHINE TYPE COMMUNICATION PHYSICAL DOWNLINK CONTROL CHANNEL (MPDCCH) PERFORMANCE IMPROVEMENT**

(57) An apparatus configured to be employed in an eNodeB associated with a machine type communication (MTC) system is disclosed. The apparatus comprises one or more processors configured to configure a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping, to be provided to the UE, in order to enable the UE to perform coherent demodulation of the MPDCCH, based on CRS and DMRS. The one or more processors is further configured to generate a physical channel configuration signal comprising one or more mapping information parameters indicative of the CRS-to-DMRS antenna port mapping, in order to provide information on the CRS-to-DMRS antenna port mapping to the UE.

FIG. 1

**Description**

## CROSS-REFERENCE TO RELATED APPLICATIONS

This application claims the benefit of and priority to U.S. Provisional Application No. 62/717,661, filed August 10, 2018, entitled "Enabling Cell Specific Reference signals for Machine-Type Communication Physical Downlink Control Channel Performance Improvement", the contents of which are herein incorporated by reference in their entirety.

## FIELD

The present disclosure relates to enhanced machine type communication (eMTC) systems, and in particular, to a system and a method to enable coherent demodulation of machine type communication physical downlink control channel (MPDCCH) associated with the eMTC system, based on cell-specific reference signal (CRS) and demodulation reference signals (DMRS) associated with the MPDCCH.

## BACKGROUND

Enhanced Machine Type Communication (eMTC) is a type of LTE-M network published by 3GPP in the Release 13 specification. eMTC is a low power wide area technology which supports internet of things (IoT) through lower device complexity and provides enhanced coverage, leveraging a mobile carriers existing LTE base stations. An eMTC UE is only required to monitor a specific narrowband for upload and download (UL/DL) transmissions as against the complete system bandwidth in traditional LTE. Since eMTC UEs only care about a narrowband of six resource blocks (RBs) at a time, the traditional long-term evolution (LTE) channels that are carried in whole-system bandwidth (PDCCH, PHICH, PCFICH) cannot be reused for eMTC. This necessitates a need for another mechanism to send control information to UEs. Therefore, a new channel called machine type communication physical downlink control channel (MPDCCH) has been introduced for eMTC, which uses the resource blocks from within the physical downlink shared channel (PDSCH) segment of regular LTE.

## BRIEF DESCRIPTION OF THE DRAWINGS

Some examples of circuits, apparatuses and/or methods will be described in the following by way of example only. In this context, reference will be made to the accompanying Figures.

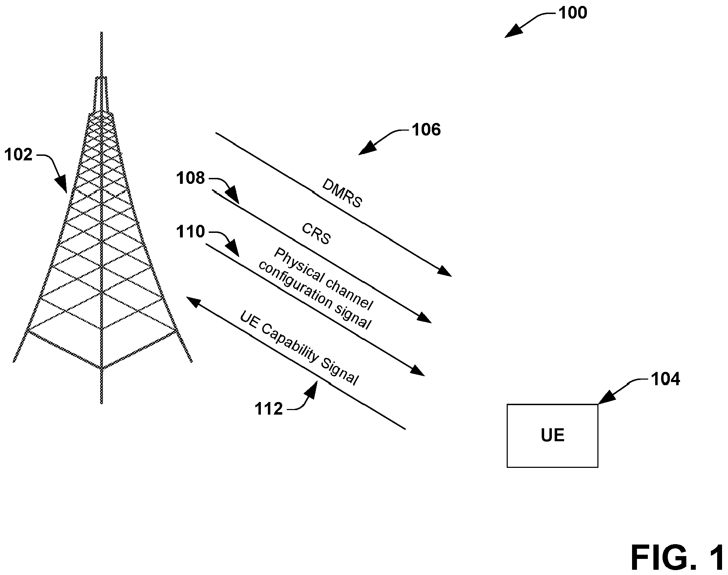

Fig. 1 illustrates a simplified block diagram of an enhanced machine type communication (eMTC) system, according to one embodiment of the disclosure.

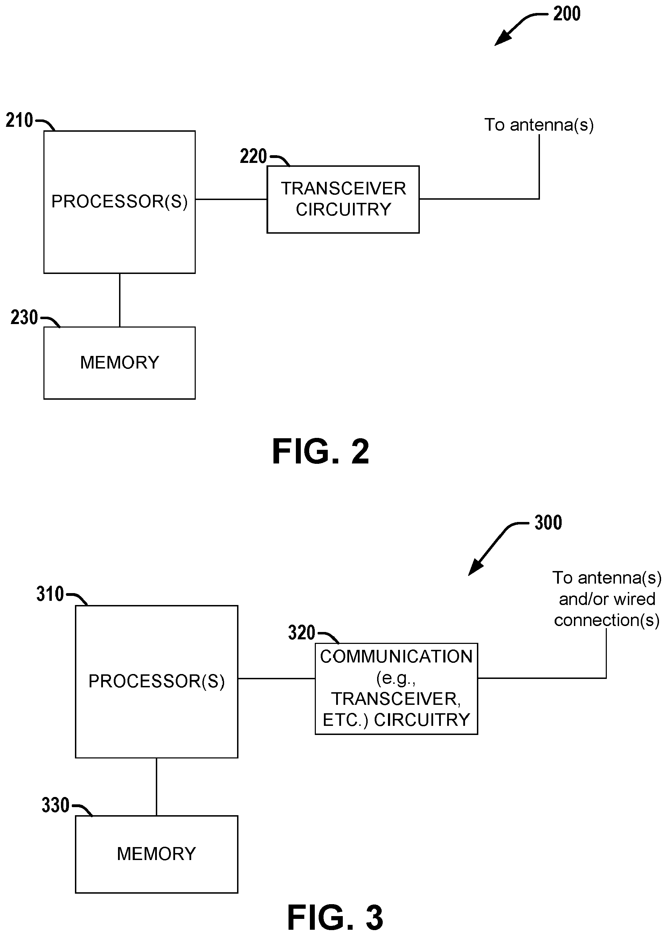

Fig. 2 illustrates a block diagram of an apparatus employable at a Base Station (BS), eNodeB, gNodeB or other network device that can enable a user equipment (UE) to perform coherent demodulation of machine type communication physical downlink control channel (MPDCCH) based on cell-specific reference signals (CRS) and demodulation reference signals (DMRS), according to various aspects described herein.

Fig. 3 illustrates a block diagram of an apparatus employable at a user equipment (UE) or other network device (e.g., IoT device) that facilitates to perform coherent demodulation of machine type communication physical downlink control channel (MPDCCH) based on cell-specific reference signals (CRS) and demodulation reference signals (DMRS), according to various aspects described herein.

## DETAILED DESCRIPTION

In one embodiment of the disclosure, an apparatus configured to be employed in an eNodeB associated with a machine type communication (MTC) system is disclosed. The apparatus comprises one or more processors configured to configure a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping, to be provided to the UE, in order to enable the UE to perform coherent demodulation of the MPDCCH, based on CRS and DMRS. The one or more processors is further configured to generate a physical channel configuration signal comprising one or more mapping information parameters indicative of the CRS-to-DMRS antenna port mapping, in order to provide information on the CRS-to-DMRS antenna port mapping to the UE. In some embodiments, the apparatus further comprises a radio frequency (RF) interface, configured to provide, to a radio frequency (RF) circuitry, the physical channel configuration signal, for subsequent transmission to the UE.

In one embodiment of the disclosure, an apparatus configured to be employed in a user equipment (UE) associated with a machine type communication (MTC) system is disclosed. The apparatus comprises one or more processors configured to process a physical channel configuration signal, received from an eNodeB associated therewith, wherein the physical channel configuration signal comprises one or more mapping information parameters indicative of a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping. In some embodiments, the one or more processors is further configured to determine the CRS-to-DMRS antenna port mapping, based on processing the physical channel configuration signal; and perform coherent demodulation of the MPDCCH, based on CRS and DMRS, in accordance with the determined CRS-to-DMRS antenna port mapping.

In one embodiment of the disclosure, a computer readable storage device storing executable instructions that, in response to execution, cause one or more processors of an eNodeB to perform operations is disclosed. In some embodiments, the operations comprise configuring a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping, to be provided to the UE, in order to enable the UE to perform coherent demodulation of the MPDCCH based on CRS and DMRS. In some embodiments, the operations further comprise generating a physical channel configuration signal comprising one or more mapping information parameters indicative of the CRS-to-DMRS antenna port mapping, in order to provide information on the CRS-to-DMRS antenna port mapping to the UE; and providing the physical channel configuration signal, to a radio frequency (RF) circuitry, for subsequent transmission to the UE.

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," "circuit" and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the event that the terms "including", "includes", "having", "has", "with", or variants thereof are used in either the detailed description and the claims, such terms are intended to be inclusive in a manner similar to the term "comprising."

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

As indicated above, a new channel called machine type communication physical downlink control channel (MPDCCH) is introduced for eMTC. The MPDCCH is transmitted in 2, 4 or 6 RBs in a single narrowband within each subframe. A narrowband is defined by 3GPP as six non-overlapping consecutive physical resource blocks in the frequency domain. The MPDCCH plays a crucial role at the Evolved Terrestrial Radio Access Network (E-UTRAN) physical layer because all downlink (DL) scheduling assignments as well as uplink (UL) scheduling grants are delivered to eMTC UEs via this channel. In some embodiments, the eMTC UEs are further referred to as bandwidth-reduced low complexity/coverage-enhanced (BL/CE) UEs, LTE-M1 UEs, CAT-M1 UEs etc. In some embodiments, the BL/CE UEs operates on a bandwidth 1.08 MHz (i.e., 6 PRB's) within an existing LTE deployment, or 1.4 MHz in standalone deployment. An eMTC UE or BL/CE UE is only required to monitor a specific narrowband for upload and download (UL/DL) transmissions as against the complete system bandwidth in traditional LTE. For coherent demodulation of MPDCCH, dedicated reference signals are used. In some embodiments, the dedicated reference signals for MPDCCH comprise demodulation reference signals (DMRS). The DMRS associated with the MPDCCH are transmitted from the same logical antenna ports as MPDCCH. In other words, a mapping between physical antenna ports and the logical antenna ports, which is referred to as *precoding* and usually realized by means of transmit (Tx) beamforming, is the same for the DMRS and MPDCCH. Therefore, no additional information about Tx beamforming is required for BL/CE UEs to decode MPDCCH based on DMRS.

However, there are always cell-specific reference signals (CRS) available in E-UTRAN. The use of CRS in addition to the DMRS of MPDCCH may potentially improve the overall MPDCCH performance, for example, by providing better channel estimation. However, the CRS are transmitted from other logical antenna ports than DMRS of MPDCCH. In other words, the mapping of the physical antenna ports to the logical antenna ports, i.e., *precoding,* for CRS is different from the DMRS of MPDCCH. Therefore, in order to exploit the CRS for MPDCCH demodulation, the BL/CE UEs should know how the antenna ports of DMRS of MPDCCH are mapped to CRS antenna ports.

Therefore, in order to enable a UE to perform coherent demodulation of the MPDCCH based on CRS and DMRS, a system and a method to configure a mapping between the CRS antenna ports and the DMRS antenna ports for the MPDCCH associated with the UE is disclosed herein. In particular, in one embodiment, an eNodeB configured to configure a mapping between the CRS antenna ports and the DMRS antenna ports for the MPDCCH, based on a predefined codebook, is proposed. In some embodiments, utilizing a mapping based on the predefined codebook provides time/frequency diversity which in turn improves the demodulation performance of MPDCCH in scenarios with fading channels and high moving speed of transmitter/receiver. In another embodiment, an eNodeB configured to configure a one-to-one antenna port mapping between the CRS antenna ports and the DMRS antenna ports associated with the MPDCCH is proposed. In some embodiments, performing coherent demodulation of the MPDCCH based on CRS and DMRS refers to the demodulation of MPDCCH based on a channel estimate derived based on CRS and DMRS.

Fig. 1 illustrates a simplified block diagram of an enhanced machine type communication (eMTC) system 100, according to one embodiment of the disclosure. The eMTC system 100 comprises an eNodeB 102 and a user equipment (UE) 104. In other embodiments, however, the eMTC system 100 can comprise a plurality of eNodeBs and UEs. In some embodiments, the eNodeB 102 is equivalent to a base station, an gNodeB in new radio (NR) systems etc. In some embodiments, the UE 104 may comprise a mobile phone, tablet computer, an internet of things (IoT) device etc. The eNodeB 102 and the UE 104 are configured to communicate with one another over a communication medium (e.g., air). In some embodiments, the UE 104 may comprise a bandwidth reduced low complexity coverage enhancement (BL/CE) UEs. In some embodiments, the eNodeB 102 is configured to provide demodulation reference signals (DMRS) 106 to the UE 104. In some embodiments, the DMRS 106 enables the UE 102 to perform demodulation of a machine type communication physical downlink control channel (MPDCCH) associated with the eMTC system 100. In some embodiments, the eNodeB 102 is further configured to provide cell-specific reference signals (CRS) 108 to the UE 104.

In some embodiments, the UE 104 is configured to perform a coherent demodulation of the MPDCCH jointly based on the DMRS 106 and the CRS 108. In some embodiments, the UE 104 is configured to perform the demodulation of the MPDCCH jointly based on the DMRS 106 and the CRS 108, in accordance with an information on a mapping between CRS antenna ports and DMRS antenna ports for the MPDCCH associated with the UE 104. In order to enable the UE 104 to perform the coherent demodulation of the MPDCCH jointly based on the DMRS 106 and the CRS 108, in some embodiments, the eNodeB 102 is further configured to generate and provide a physical channel configuration signal 110 comprising one or more mapping information parameters indicative of the mapping between CRS antenna ports and DMRS antenna ports for the MPDCCH to the UE 104. In some embodiments, the eNodeB 102 is further configured to configure the mapping between the CRS antenna ports and the DMRS antenna ports for the MPDCCH associated with the UE 104, forming a CRS-to-DMRS antenna port mapping (or referred to herein as a CRS-to-DMRS antenna port mapping). In some embodiments, the CRS-to-DMRS antenna port mapping comprises a UE-specific mapping. In other words, the CRS-to-DMRS antenna port mapping is configured specifically for a select UE (e.g., the UE 104 in Fig. 1) associated with the eNodeB 102. However, in other embodiments, the CRS-to-DMRS antenna port mapping may be applicable to one or more UEs associated with the eNodeB 102. For example, in some embodiments, the CRS-to-DMRS antenna port mapping may comprise a cell-specific mapping that is applicable to all the BL/CE UEs (for example, those which are capable of coherent demodulation of the MPDCCH based on CRS and DMRS) associated with the eNodeB 102.

In some embodiments, the eNodeB 102 is configured to provide the physical channel configuration signal 110 comprising information indicative of the CRS-to-DMRS antenna port mapping, to the UE 104 via radio resource control (RRC) protocol. Typically, RRC messages with UE-specific signaling are delivered via physical downlink shared channel (PDSCH). However, PDSCH is scheduled to BL/CE UEs (e.g., the UE 104) by MPDCCH. Therefore, in such embodiments, at the initial steps the UE 104 may demodulate MPDCCH relying on DMRS only. Later, after receiving the mapping information, the UE 104 may demodulate MPDCCH transmissions jointly based on the CRS 108 and the DMRS 106. Alternately, in other embodiments (e.g., when the CRS-to-DMRS antenna port mapping comprises a cell-specific mapping), the eNodeB 102 is configured to provide the physical channel configuration signal 110 comprising information indicative of the CRS-to-DMRS antenna port mapping, to the UE 104 via system information (SI) messages, e.g., SIB1-BR or SIBx-BR (x >1). In some embodiments, the SI messages for BL/CE UEs are conveyed directly using PDSCH without dynamic scheduling via MPDCCH. Upon receiving the physical channel configuration signal 110, the UE 104 is configured to process the physical channel configuration signal 110, and determine the CRS-to-DMRS antenna port mapping, based on processing the physical channel configuration signal 110. In some embodiments, the UE 102 is further configured to perform coherent demodulation of the MPDCCH based on the CRS 108 and the DMRS 106, in accordance with the determined CRS-to-DMRS antenna port mapping.

In some embodiments, the CRS-to-DMRS antenna port mapping comprises a single mapping configuration applicable to all search spaces associated with the MPDCCH. However, in other embodiments, the CRS-to-DMRS antenna port mapping may be separately configured for one or more search spaces associated with the MPDCCH. For example, in one embodiment, the CRS-to-DMRS antenna port mapping comprises a first mapping between the CRS antenna ports and the DMRS antenna ports configured for common search space (CSS) of the MPDCCH, and a second mapping between the CRS antenna ports and the DMRS antenna ports configured for UE-specific search spaces (UESS) of the MPDCCH. In some embodiments, the first mapping for the CSS and the second mapping for the UESS are the same. However, in other embodiments, the first mapping for the CSS and the second mapping for the UESS may be different. In some embodiments, the physical channel configuration signal 110 may comprise a single signal configured to convey information on the CRS-to-DMRS antenna port mapping associated with one or more search spaces respectively, associated with the MPDCCH. However, in other embodiments, the physical channel configuration signal 110 may comprise one or more signals configured to convey information on the CRS-to-DMRS antenna port mapping associated with one or more search spaces respectively, associated with the MPDCCH.

In particular, in some embodiments, the physical channel configuration signal 110 may comprise a common physical channel configuration signal comprising one or more mapping information parameters indicative of the first mapping for the CSS of the MPDCCH and a UE-specific physical channel configuration signal comprising one or more mapping information parameters indicative of the second mapping for the UESS of the MPDCCH. In some embodiments, the eNodeB 102 is configured to provide the common physical channel configuration signal (indicative of the mapping for the CSS) to the UE 104 via system information (SI) messages. Further, the eNodeB 102 is configured to provide the UE-specific physical channel configuration signal (indicative of the mapping for the UESS) to the UE 104 via RRC messages. However, in other embodiments, the eNodeB 102 may configured to provide the common physical channel configuration signal and the UE-specific physical channel configuration signal to the UE 104 differently (e.g., both via SI messages or both via RRC messages).

In some embodiments, the first mapping between the CRS antenna ports and the DMRS antenna ports configured for common search space (CSS) of the MPDCCH may comprise one or more mapping between the CRS antenna ports and the DMRS antenna ports configured respectively for one or more CSS types (e.g., Type 0, 1, 2 etc.) associated with the MPDCCH. In some embodiments, the one or more mapping between the CRS antenna ports and the DMRS antenna ports configured respectively for the one or more CSS types associated with the MPDCCH may be same. Alternately, in other embodiments, at least one mapping corresponding to one CSS type may be different from mapping associated with the other CSS types.

In some embodiments, for a given search space (or for all search spaces) associated with the MPDCCH, the CRS-to-DMRS antenna port mapping is configured as a function of narrowband (NB) associated with the MPDCCH. Further, in some embodiments, the CRS-to-DMRS antenna port mapping is configured as a function of the coverage enhancement (CE) mode (e.g., CE mode A or B) in which the MPDCCH is monitored for a given search space. In one example, for Type 2 CSS for MPDCCH (for random access), the CRS-to-DMRS antenna port mapping is configured corresponding to each physical random access channel (PRACH) resource set, in some embodiments. Similarly, in another example, for Type 1 CSS for MPDCCH (for paging), the CRS-to-DMRS antenna port mapping is defined corresponding to each paging occasion (PNB) and/or paging narrowband (PNB). Further, in some embodiments, the CRS-to-DMRS antenna port mapping is configured as a function of radio network temporary identifier (RNTI). In particular, the CRS-to-DMRS antenna port mapping may be separately configured for MPDCCH associated with different RNTIs, e.g., separate/different configurations of CRS-to-DMRS antenna port mapping for MPDCCH associated with C-RNTI, P-RNTI, RA-RNTI, and G-RNTI. In some embodiments, the different configurations based on RNTI can provide flexibility in realizing different beamforming for different groups of UEs in the cell the downlink (DL) control channel (i.e., the MPDCCH) transmissions may be targeted for.

In some embodiments, the eNodeB 102 is configured to configure the CRS-to-DMRS antenna port mapping, based on a predefined codebook, as shown in Table 1 or Table 2 below. In some embodiments, the predefined codebook comprises a set of predefined precoding vectors/matrices known both at the UE 104 and the eNodeB 102. In some embodiments, the CRS-to-DMRS antenna port mapping is defined based on one or more precoding matrices of the set of precoding matrices associated with the predefined codebook.

Table 1

| Codebook index | Number of layers $\upsilon$ | |
| --- | --- | --- |
| | **1** | **2** |
| 0 | $\frac{1}{\sqrt{2}}\begin{bmatrix}1\\1\end{bmatrix}$ | $\frac{1}{\sqrt{2}}\begin{bmatrix}1 & 0\\0 & 1\end{bmatrix}$ |
| 1 | $\frac{1}{\sqrt{2}}\begin{bmatrix}1\\-1\end{bmatrix}$ | $\frac{1}{2}\begin{bmatrix}1 & 1\\1 & -1\end{bmatrix}$ |
| 2 | $\frac{1}{\sqrt{2}}\begin{bmatrix}1\\j\end{bmatrix}$ | $\frac{1}{2}\begin{bmatrix}1 & 1\\j & -j\end{bmatrix}$ |
| 3 | $\frac{1}{\sqrt{2}}\begin{bmatrix}1\\-j\end{bmatrix}$ | - |

Table 2

| Codebook index | $u_n$ | Number of layer $\upsilon$ | | | |
|---|---|---|---|---|---|
| | | 1 | 2 | 3 | 4 |
| 0 | $u_0 = [1\ -1\ -1\ -1]^T$ | $W_0^{\{1\}}$ | $W_0^{\{14\}}\big/\sqrt{2}$ | $W_0^{\{124\}}\big/\sqrt{3}$ | $W_0^{\{1234\}}\big/2$ |
| 1 | $u_1 = [1\ -j\ 1\ j]^T$ | $W_1^{\{1\}}$ | $W_1^{\{12\}}\big/\sqrt{2}$ | $W_1^{\{123\}}\big/\sqrt{3}$ | $W_1^{\{1234\}}\big/2$ |
| 2 | $u_2 = [1\ 1\ -1\ 1]^T$ | $W_2^{\{1\}}$ | $W_2^{\{12\}}\big/\sqrt{2}$ | $W_2^{\{123\}}\big/\sqrt{3}$ | $W_2^{\{3214\}}\big/2$ |
| 3 | $u_3 = [1\ j\ 1\ -j]^T$ | $W_3^{\{1\}}$ | $W_3^{\{12\}}\big/\sqrt{2}$ | $W_3^{\{123\}}\big/\sqrt{3}$ | $W_3^{\{3214\}}\big/2$ |
| 4 | $u_4 = \begin{bmatrix}1 & (-1-j)\big/\sqrt{2} & -j & (1-j)\big/\sqrt{2}\end{bmatrix}^T$ | $W_4^{\{1\}}$ | $W_4^{\{14\}}\big/\sqrt{2}$ | $W_4^{\{124\}}\big/\sqrt{3}$ | $W_4^{\{1234\}}\big/2$ |
| 5 | $u_5 = \begin{bmatrix}1 & (1-j)\big/\sqrt{2} & j & (-1-j)\big/\sqrt{2}\end{bmatrix}^T$ | $W_5^{\{1\}}$ | $W_5^{\{14\}}\big/\sqrt{2}$ | $W_5^{\{124\}}\big/\sqrt{3}$ | $W_5^{\{1234\}}\big/2$ |
| 6 | $u_6 = \begin{bmatrix}1 & (1+j)\big/\sqrt{2} & -j & (-1+j)\big/\sqrt{2}\end{bmatrix}^T$ | $W_6^{\{1\}}$ | $W_6^{\{13\}}\big/\sqrt{2}$ | $W_6^{\{134\}}\big/\sqrt{3}$ | $W_6^{\{1324\}}\big/2$ |
| 7 | $u_7 = \begin{bmatrix}1 & (-1+j)\big/\sqrt{2} & j & (1+j)\big/\sqrt{2}\end{bmatrix}^T$ | $W_7^{\{1\}}$ | $W_7^{\{13\}}\big/\sqrt{2}$ | $W_7^{\{134\}}\big/\sqrt{3}$ | $W_7^{\{1324\}}\big/2$ |
| 8 | $u_8 = [1 = [1\ -1\ 1\ 1]^T$ | $W_8^{\{1\}}$ | $W_8^{\{12\}}\big/\sqrt{2}$ | $W_8^{\{124\}}\big/\sqrt{3}$ | $W_8^{\{1234\}}\big/2$ |
| 9 | $u_9 = [1\ -j\ -1\ -j]^T$ | $W_9^{\{1\}}$ | $W_9^{\{14\}}\big/\sqrt{2}$ | $W_9^{\{134\}}\big/\sqrt{3}$ | $W_9^{\{1234\}}\big/2$ |
| 10 | $u_{10} = [1\ 1\ 1\ -1]^T$ | $W_{10}^{\{1\}}$ | $W_{10}^{\{13\}}\big/\sqrt{2}$ | $W_{10}^{\{123\}}\big/\sqrt{3}$ | $W_{10}^{\{1324\}}\big/2$ |
| 11 | $u_{11} = [1\ j\ -1\ j]^T$ | $W_{11}^{\{1\}}$ | $W_{11}^{\{13\}}\big/\sqrt{2}$ | $W_{11}^{\{134\}}\big/\sqrt{3}$ | $W_{11}^{\{1324\}}\big/2$ |
| 12 | $u_{12} = [1\ -1\ -1\ 1]^T$ | $W_{12}^{\{1\}}$ | $W_{12}^{\{12\}}\big/\sqrt{2}$ | $W_{12}^{\{123\}}\big/\sqrt{3}$ | $W_{12}^{\{1234\}}\big/2$ |

EP 4 362 406 A2

| Codebook index | $u_n$ | Number of layer $\upsilon$ | | | |
|---|---|---|---|---|---|
| | | 1 | 2 | 3 | 4 |
| 13 | $u_{13} = [1\ {-}1\ 1\ {-}\ 1]^T$ | $W_{13}^{\{1\}}$ | $W_{13}^{\{13\}}\big/\sqrt{2}$ | $W_{13}^{\{123\}}\big/\sqrt{3}$ | $W_{13}^{\{1324\}}\big/2$ |
| 14 | $u_{14} = [1\ 1\ {-}1\ {-}1]^T$ | $W_{14}^{\{1\}}$ | $W_{14}^{\{13\}}\big/\sqrt{2}$ | $W_{14}^{\{123\}}\big/\sqrt{3}$ | $W_{14}^{\{3214\}}\big/2$ |
| 15 | $u_{15} = [1\ 1\ 1\ 1]^T$ | $W_{15}^{\{1\}}$ | $W_{15}^{\{12\}}\big/\sqrt{2}$ | $W_{15}^{\{123\}}\big/\sqrt{3}$ | $W_{15}^{\{1234\}}\big/2$ |

In some embodiments, codebooks specified in E-UTRAN for 2 and 4 antenna ports from Table 6.3.4.2.3-1 or Table 6.3.4.2.3-2 of the technical specification TS 36.211 corresponding to the single-layer transmission is reused for precoding of MPDCCH. However, in other embodiments, other codebooks may be used. Table 1 above illustrates the codebook specified in E-UTRAN for 2 antenna ports (corresponding to Table 6.3.4.2.3-1 of TS 36.211), and Table 2 above illustrates the codebook specified in E-UTRAN for 4 antenna ports (corresponding to Table 6.3.4.2.3-2 of TS 36.211). In some embodiments, a maximum number of CRS ports for MPDCCH is 4. In some embodiments, Table 1 is utilized for configuring the CRS-to-DMRS antenna port mapping, when the number of CRS antenna ports is less than or equal to 2. However, in embodiments where more than 2 CRS antenna ports are utilized, the CRS-to-DMRS antenna port mapping is configured based on Table 2. In some embodiments, Table 1 comprises a first column of precoding matrices corresponding to one CRS antenna port and a second column of precoding matrices corresponding to two CRS antenna ports. Further, Table 1 comprises an index column comprising a set of precoding matrix indices (PMIs). In some embodiments, each precoding matrix index identifies a respective precoding matrix from the predefined codebook, based on a number of layers (e.g., the number of CRS antenna ports).

In some embodiments, Table 2 comprises a first column of precoding matrices corresponding to one CRS antenna port, a second column of precoding matrices corresponding to two CRS antenna ports, a third column of precoding matrices corresponding to three CRS antenna ports and a fourth column of precoding matrices corresponding to four CRS antenna ports. Further, Table 2 comprises an index column comprising a set of precoding matrix indices (PMIs). In some embodiments, each precoding matrix index identifies a respective precoding matrix from the predefined codebook, based on a number of layers (e.g., the number of CRS antenna ports). In some embodiments, the quantity

$W_n^{\{s\}}$ in Table 2 denotes the precoding matrix defined by the columns given by the expression $W_n = I - 2u_n u_n^H / u_n^H u_n$ where $I$ is the $4 \times 4$ identity matrix and the vector $u_n$ is given by Table 2.

In some embodiments, the eNodeB 102 is configured to configure the CRS-to-DMRS antenna port mapping based on one or more precoding matrices, associated with the predefined codebook (e.g., Table 1 or Table 2). In some embodiments, the eNodeB 102 is further configured to provide information on the one or more precoding matrices to the UE 104, via the physical channel configuration signal 110. In some embodiments, the eNodeB 102 is configured to provide information of the one or more precoding matrices to the UE 104 based on providing the corresponding PMIs. Therefore, in such embodiments, the one or more mapping information parameters associated with the physical channel configuration signal 110 comprises an index parameter comprising a precoding matrix index (PMI) associated with the predefined codebook. In some embodiments, the PMI identifies a respective precoding matrix from the predefined codebook.

Upon receiving the physical channel configuration signal 110 from the eNodeB 102, the UE 104 is configured to identify the precoding matrix based on the PMI (by processing the physical channel configuration signal 110), and utilize the precoding matrix to determine a channel estimation of the MPDCCH based on both the DMRS 106 and the CRS 108, based on the precoding matrix. In some embodiments, determining channel estimation of the MPDCCH based on both DMRS 106 and CRS 108, comprises determining a channel estimation based on the CRS 108 and modifying the CRS based channel estimation based on utilizing the precoding matrix to get the channel estimation of the MPDCCH based on both the DMRS 106 and the CRS 108. In some embodiments, the UE 106 is subsequently configured to perform demodulation of the MPDCCH, based on the channel estimation derived based on both the DMRS 106 and the CRS 108.

In some embodiments, in order to enable time/frequency diversity, the eNodeB 102 is configured to enable precoder cycling (i.e., precoder matrix cycling) in the frequency and/or time domains. In such embodiments, the eNodeB 102 is configured to configure PMI switching patterns as a function of frequency and/or time. In some embodiments, the PMI switching pattern comprises a pattern based on which the PMI associated with the predefined codebook is varied among a set of PMIs associated with the predefined codebook, as a function of frequency and/or time. In some embodiments, the eNodeB 102 is further configured to provide the PMI switching pattern to the UE 104, via the physical channel configuration signal 110. In such embodiments, the one or more mapping information parameters associated with the physical channel configuration signal 110 further comprises a switching pattern parameter indicative of the PMI switching pattern. In some embodiments, in order to enable frequency domain/ time domain diversity, the one or more mapping information parameters further comprises an interval parameter indicative of intervals in frequency (e.g., one or more physical resource blocks (PRBs)) and/or periods in time (e.g., one or more subframes) based on which the PMI associated with the predefined codebook is varied, in accordance with the PMI switching pattern.

In some embodiments, in order to reduce the number of precoders (i.e., the precoding matrices) for the cycling operation, the eNodeB 102 is configured to include a PMI restriction parameter within the physical channel configuration signal 110. In some embodiments, the PMI restriction parameter restricts the PMIs within the set of PMIs associated with the predefined codebook among which the PMI is varied as a function of frequency or time, to less than all the PMIs associated with the predefined codebook. In such embodiments, the one or more mapping information parameters associated with the physical channel configuration signal 110 further comprises the PMI restriction parameter. However, in other embodiments, the PMI restriction parameter may be part of the technical specification (or predefined). In such embodiments, the PMI restriction parameter may be known to both the eNodeB 102 and the UE 104, and therefore need not be signaled to the UE 104 (as part of the physical channel configuration signal 110). In case of the codebook restriction, the precoder for MPDCCH is cycled over the indicated precoding vectors only. Therefore, to fix the precoder in time and frequency, in some embodiments, the PMI restriction parameter restricts the codebook subset to a single precoding vector/matrix only (e.g., a single PMI). For the options of enabling cycling of the precoding (or mapping) over a set or subset of possible precoding vectors, in order to enable cross-subframe channel estimation for MPDCCH demodulation, the UE 102 may assume that for a given PRB, the choice of the precoder/mapping from CRS to DMRS antenna ports is the same over $N_{NB}^{ch,DL}$ consecutive subframes, where $N_{NB}^{ch,DL}$ is the frequency hopping interval configured for the corresponding CE mode. In frequency domain, the precoders (i.e., the precoding matrices) may cycle every PRB within a narrowband (NB) in which the MPDCCH is monitored.

In another embodiment, when the number of CRS antenna ports and the DMRS antenna ports are equal, the eNodeB 102 may be configured to configure a one-to-one antenna port mapping between the CRS antenna ports and the DMRS antenna ports for the MPDCCH, when joint CRS and DMRS operation is enabled for MPDCCH. Therefore, in such embodiments, the CRS-to-DMRS antenna port mapping comprises one-to-one antenna port mapping. In such embodiments, the eNodeB 102 is configured to utilize Space-Frequency Block Coding (SFBC)/Switched Tx diversity for precoding MPDCCH. In some embodiments, the SFBC and Switched Tx Diversity corresponding to the cases of 2 and 4 antenna ports, respectively defined in E-UTRAN [36.211], in order to transmit legacy physical downlink control channel (PDCCH) channel are reused for precoding MPDCCH. In some embodiments, the eNodeB 102 is further configured to provide information on the one-to-one antenna port mapping between the CRS antenna ports and DMRS antenna ports, to the UE 104, via the physical channel configuration signal 110. In such embodiments, the one or more mapping information parameters associated with the physical channel configuration signal 110 comprises a mapping parameter indicative of the one-to-one antenna port mapping between the CRS antenna ports and DMRS antenna ports.

Upon processing the physical channel configuration signal 110 indicative of the one-to-one antenna port mapping between the CRS antenna ports and DMRS antenna ports, the UE 104 may assume that the CRS antenna ports and the DMRS antenna ports are the same. In such embodiments, the UE 104 may be configured to perform channel estimation based on the CRS 108 or the DMRS 106. In some embodiments, the eNodeB 102 is further configured to provide information on the precoding method comprising the SFBC and Switched Tx Diversity to the UE 104. In such embodiments, the physical channel configuration signal 110 further comprises a precoding parameter indicative of the SFBC and Switched Tx Diversity precoding method associated with the MPDCCH, in order to enable the UE 104 to perform coherent demodulation of the MPDCCH based on the CRS 108 and the DMRS 106 (specifically, based on the channel estimate derived based on the DMRS 106 or the CRS 108).

In order to increase the strength of MPDCCH transmissions, the eNodeB 102 is configured to apply transmit (Tx) power boosting to enhanced control channel elements (ECCEs) of MPDCCH, in some embodiments. The power boosting may be applied to both MPDCCH and its DMRS. Therefore, if the joint CRS and DMRS based demodulation for MPDCCH is enabled, information on a power offset between the CRS antenna ports and DMRS antenna ports is required at the UE 104, in order to demodulate the MPDCCH. In such embodiments, the eNodeB 102 may be further configured to determine the power offset between the CRS antenna ports and the DMRS antenna ports associated with the MPDCCH. In some embodiments, the eNodeB 102 is further configured to provide information on the power offset between the CRS antenna ports and the DMRS antenna ports associated with the MPDCCH to the UE 104 (e.g., as part of the physical channel configuration signal 110). In such embodiments, the physical channel configuration signal 110 may further comprise one or more power offset parameters indicative of the power offset between the CRS antenna ports and the DMRS antenna ports associated with the MPDCCH. However, in other embodiments, one or more possible values of the power offset between the CRS antenna ports and the DMRS antenna ports associated with the MPDCCH are predefined and is available to the UE 104.

In some embodiments, the eNodeB 102 is configured to provide the physical channel configuration signal 110 to the UE 104, in response to receiving a UE capability signal 112 from the UE 104. In some embodiments, the UE capability signal 112 comprises an indication regarding a capability of the UE 104 to perform coherent demodulation of the MPDCCH jointly based on the CRS and the DMRS. In such embodiments, the UE 104 is further configured to generate the UE capability signal 112. However, in other embodiments, the eNodeB 102 may be configured to provide the physical channel configuration signal 110 to the UE 104, without receiving the UE capability signal 112 from the UE 104.

Referring to **FIG. 2,** illustrated is a block diagram of an apparatus 200 employable at a Base Station (BS), eNodeB, gNodeB or other network device that can enable a user equipment (UE) to perform coherent demodulation of machine type communication physical downlink control channel (MPDCCH) based on cell-specific reference signals (CRS) and demodulation reference signals (DMRS), according to various aspects described herein. The apparatus 200 can include one or more processors 210 comprising processing circuitry and associated interface(s) (e.g., a radio frequency interface), communication circuitry 220, which can comprise one or more of transmitter circuitry (e.g., associated with one or more transmit chains) or receiver circuitry (e.g., associated with one or more receive chains), wherein the transmitter circuitry and receiver circuitry can employ common circuit elements, distinct circuit elements, or a combination thereof), and memory 230 (which can comprise any of a variety of storage mediums and can store instructions and/or data associated with one or more of processor(s) 210 or communication circuitry 220). In various aspects, the apparatus 200 can be included within an Evolved Universal Terrestrial Radio Access Network (E-UTRAN) Node B (Evolved Node B, eNodeB, or eNB), next generation Node B (gNodeB or gNB) or other base station or TRP (Transmit/Receive Point) in a wireless communications network. In some aspects, the processor(s) 210, communication circuitry 220, and the memory 230 can be included in a single device, while in other aspects, they can be included in different devices, such as part of a distributed architecture. In some embodiments, the apparatus 200 could be included within the eNodeB 102 of Fig. 1.

Referring to **FIG. 3,** illustrated is a block diagram of an apparatus 300 employable at a user equipment (UE) or other network device (e.g., IoT device) that facilitates to perform coherent demodulation of machine type communication physical downlink control channel (MPDCCH) based on cell-specific reference signals (CRS) and demodulation reference signals (DMRS), according to various aspects described herein. Apparatus 300 can include one or more processors 310 comprising processing circuitry and associated interface(s) (e.g., radio frequency interface), transceiver circuitry 320 (e.g., comprising RF circuitry, which can comprise transmitter circuitry (e.g., associated with one or more transmit chains) and/or receiver circuitry (e.g., associated with one or more receive chains) that can employ common circuit elements, distinct circuit elements, or a combination thereof), and a memory 330 (which can comprise any of a variety of storage mediums and can store instructions and/or data associated with one or more of processor(s) 310 or transceiver circuitry 320). In various aspects, apparatus 300 can be included within a user equipment (UE).

In various aspects discussed herein, signals and/or messages can be generated and output for transmission, and/or transmitted messages can be received and processed. Depending on the type of signal or message generated, outputting for transmission (e.g., by processor(s) 310) can comprise one or more of the following: generating a set of associated bits that indicate the content of the signal or message, coding (e.g., which can include adding a cyclic redundancy check (CRC) and/or coding via one or more of turbo code, low density parity-check (LDPC) code, tailbiting convolution code (TBCC), etc.), scrambling (e.g., based on a scrambling seed), modulating (e.g., via one of binary phase shift keying (BPSK), quadrature phase shift keying (QPSK), or some form of quadrature amplitude modulation (QAM), etc.), and/or resource mapping (e.g., to a scheduled set of resources, to a set of time and frequency resources granted for uplink transmission, etc.). Depending on the type of received signal or message, processing (e.g., by processor(s) 310) can comprise one or more of: identifying physical resources associated with the signal/message, detecting the signal/message, resource element group deinterleaving, demodulation, descrambling, and/or decoding. In some embodiments, the apparatus 300 could be included within the UE 104 of Fig. 1.

Examples can include subject matter such as a method, means for performing acts or blocks of the method, at least one machine-readable medium including instructions that, when performed by a machine cause the machine to perform acts of the method or of an apparatus or system for concurrent communication using multiple communication technologies according to embodiments and examples described herein.

Example 1 is an apparatus configured to be employed in an eNodeB associated with a machine type communication (MTC) system, comprising one or more processors configured to configure a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping, to be provided to the UE, in order to enable the UE to perform coherent demodulation of the MPDCCH, based on CRS and DMRS; generate a physical channel configuration signal comprising one or more mapping information parameters indicative of the CRS-to-DMRS antenna port mapping, in order to provide information on the CRS-to-DMRS antenna port mapping to the UE; and a radio frequency (RF) interface, configured to provide, to a radio frequency (RF) circuitry, the physical channel configuration signal, for subsequent transmission to the UE.

Example 2 is an apparatus, including the subject matter of example 1, wherein the CRS-to-DMRS antenna port mapping is configured based on one or more precoding matrices associated with a predefined codebook, and wherein the one or more mapping information parameters comprises an index parameter comprising a precoding matrix index (PMI) associated with the predefined codebook, wherein the PMI identifies a respective precoding matrix from the predefined codebook.

Example 3 is an apparatus, including the subject matter of examples 1-2, including or omitting elements, wherein, in order to enable frequency domain diversity and/or time domain diversity, the one or more mapping information parameters further comprises a switching pattern parameter indicative of a PMI switching pattern based on which the PMI associated with the predefined codebook is varied among a set of PMIs associated with the predefined codebook, as a function of frequency and/or time of the MPDCCH, respectively.

Example 4 is an apparatus, including the subject matter of examples 1-3, including or omitting elements, wherein, in order to enable frequency domain/time domain diversity, the one or more mapping information parameters further comprises an interval parameter indicative of intervals in frequency and/or periods in time, based on which the PMI associated with the predefined codebook is varied, in accordance with the PMI switching pattern.

Example 5 is an apparatus, including the subject matter of examples 1-4, including or omitting elements, wherein the one or more mapping information parameters further comprises a PMI restriction parameter that restricts the PMIs within the set of PMIs associated with the predefined codebook among which the PMI is varied as a function of frequency or time, to less than all the PMIs associated with the predefined codebook.

Example 6 is an apparatus, including the subject matter of examples 1-5, including or omitting elements, wherein, when the number of CRS antenna ports and the number of DMRS antenna ports associated with the MPDCCH are equal, the CRS-to-DMRS antenna port mapping comprises a one-to-one antenna port mapping, and wherein the one or more mapping information parameters comprises a mapping parameter indicative of the one-to-one antenna port mapping between the CRS antenna ports and DMRS antenna ports for the MPDCCH.

Example 7 is an apparatus, including the subject matter of examples 1-6, including or omitting elements, wherein a precoding method associated with the MPDCCH comprises space frequency block coding (SFBC)/switched Tx diversity, and wherein the physical channel configuration signal further comprises a precoding parameter indicative of the (SFBC)/switched Tx diversity precoding method associated with the MPDCCH, in order to enable the UE to perform coherent demodulation of the MPDCCH based on the CRS and the DMRS.

Example 8 is an apparatus, including the subject matter of examples 1-7, including or omitting elements, wherein the physical channel configuration signal further comprises one or more power offset parameters indicative of a power offset between the CRS antenna ports and the DMRS antenna ports of the MPDCCH.

Example 9 is an apparatus, including the subject matter of examples 1-8, including or omitting elements, wherein the CRS-to-DMRS antenna port mapping, comprises a first mapping between the CRS antenna ports and the DMRS antenna ports configured for common search space (CSS) of the MPDCCH, and a second mapping between the CRS antenna ports and the DMRS antenna ports configured for UE-specific search spaces (UESS) of the MPDCCH.

Example 10 is an apparatus, including the subject matter of examples 1-9, including or omitting elements, wherein the physical channel configuration signal comprises a common physical channel configuration signal comprising one or more mapping information parameters indicative of the first mapping for the CSS of the MPDCCH, and a UE-specific physical channel configuration signal comprising one or more mapping information parameters indicative of the second mapping for the UESS of the MPDCCH.

Example 11 is an apparatus, including the subject matter of examples 1-10, including or omitting elements, wherein the first mapping for the CSS of the MPDCCH comprises one or more mapping configured for one or more CSS types, respectively, associated with the MPDCCH.

Example 12 is an apparatus, including the subject matter of examples 1-11, including or omitting elements, wherein the CRS-to-DMRS antenna port mapping is configured as a function of narrowband associated therewith.

Example 13 is an apparatus, including the subject matter of examples 1-12, including or omitting elements, wherein the CRS-to-DMRS antenna port mapping is configured as a function of a coverage enhancement (CE) mode in which the MDPCCH is monitored for a given search space associated therewith.

Example 14 is an apparatus, including the subject matter of examples 1-13, including or omitting elements, wherein the CRS-to-DMRS antenna port mapping is configured as a function of radio network temporary identifier (RNTI).

Example 15 is an apparatus, including the subject matter of examples 1-14, including or omitting elements, wherein the CRS-to-DMRS antenna port mapping comprises UE-specific mapping that is configured specifically for the UE, and wherein the physical channel configuration signal comprises a UE-specific signal.

Example 16 is an apparatus configured to be employed in a user equipment (UE) associated with a machine type communication (MTC) system, comprising one or more processors configured to process a physical channel configuration signal, received from an eNodeB associated therewith, wherein the physical channel configuration signal comprises one or more mapping information parameters indicative of a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping; determine the CRS-to-DMRS antenna port mapping, based on processing the physical channel configuration signal; and perform coherent demodulation of the MPDCCH, based on CRS and DMRS, in accordance with the determined CRS-to-DMRS antenna port mapping.

Example 17 is an apparatus, including the subject matter of example 16, wherein the CRS-to-DMRS antenna port mapping is based on one or more precoding matrices associated with a predefined codebook, and wherein the one or more mapping information parameters comprises an index parameter comprising a precoding matrix index (PMI) associated with the predefined codebook, wherein the precoding matrix index identifies a respective precoding matrix from the predefined codebook.

Example 18 is an apparatus, including the subject matter of examples 16-17, including or omitting elements, wherein, in order to enable frequency domain diversity and/or time domain diversity, the one or more mapping information parameters further comprises a switching pattern parameter indicative of a PMI switching pattern based on which the PMI associated the predefined codebook is varied among a set of PMIs associated with the predefined codebook, as a function of frequency and/or time of the MPDCCH, respectively.

Example 19 is an apparatus, including the subject matter of examples 16-18, including or omitting elements, wherein, when the number of CRS antenna ports and the number of DMRS antenna ports associated with the MPDCCH are equal, the CRS-to-DMRS antenna port mapping comprises a one-to-one antenna port mapping, and wherein the one or more mapping information parameters comprises a mapping parameter indicative of the one-to-one antenna port mapping between the CRS antenna ports and DMRS antenna ports for the MPDCCH.

Example 20 is an apparatus, including the subject matter of examples 16-19, including or omitting elements, wherein a precoding method associated with the MPDCCH comprises space frequency block coding (SFBC)/switched Tx diversity, and wherein the physical channel configuration signal further comprises a precoding parameter indicative of the (SFBC)/switched Tx diversity precoding method associated with the MPDCCH, in order to enable the UE to perform coherent demodulation of the MPDCCH based on the CRS and the DMRS.

Example 21 is an apparatus, including the subject matter of examples 16-20, including or omitting elements, wherein the physical channel configuration signal further comprises one or more power offset parameters indicative of a power offset between the CRS antenna ports and the DMRS antenna ports associated with the MPDCCH.

Example 22 is an apparatus, including the subject matter of examples 16-21, including or omitting elements, wherein the one or more processors is further configured to provide a UE capability signal comprising an indication regarding a capability of the UE to perform coherent demodulation of the MPDCCH jointly based on the CRS and the DMRS, to the eNodeB, via a radio frequency (RF) circuitry, prior to processing the physical channel configuration signal.

Example 23 is a computer readable storage device storing executable instructions that, in response to execution, cause one or more processors of an eNodeB to perform operations, the operations comprising configuring a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping, to be provided to the UE, in order to enable the UE to perform coherent demodulation of the MPDCCH based on CRS and DMRS; generating a physical channel configuration signal comprising one or more mapping information parameters indicative of the CRS-to-DMRS antenna port mapping, in order to provide information on the CRS-to-DMRS antenna port mapping to the UE; and providing the physical channel configuration signal, to a radio frequency (RF) circuitry, for subsequent transmission to the UE.

Example 24 is a computer readable storage device, including the subject matter of example 23, wherein the CRS-to-DMRS antenna port mapping is configured based on one or more precoding matrices associated with a predefined codebook, and wherein the one or more mapping information parameters comprises an index parameter comprising a precoding matrix index (PMI) associated with the predefined codebook, wherein the PMI identifies a respective precoding matrix from the predefined codebook.

Example 25 is a computer readable storage device, including the subject matter of examples 23-24, including or omitting elements, wherein, when the number of CRS antenna ports and the number of DMRS antenna ports associated with the MPDCCH are equal, the CRS-to-DMRS antenna port mapping comprises a one-to-one antenna port mapping, and wherein the one or more mapping information parameters comprises a mapping parameter indicative of the one-to-one antenna port mapping between the CRS antenna ports and DMRS antenna ports.

While the invention has been illustrated, and described with respect to one or more implementations, alterations and/or modifications may be made to the illustrated examples without departing from the spirit and scope of the appended claims. In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the invention.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

The following section of the description relates to further examples. The numbered paragraphs in this section are not claims. The claims are set forth below in the later section headed "claims".

1. An apparatus configured to be employed in an eNodeB associated with a machine type communication (MTC) system, comprising: one or more processors configured to: configure a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping, to be provided to the UE, in order to enable the UE to perform coherent demodulation of the MPDCCH, based on CRS and DMRS; generate a physical channel configuration signal comprising one or more mapping information parameters indicative of the CRS-to-DMRS antenna port mapping, in order to provide information on the CRS-to-DMRS antenna port mapping to the UE; and a radio frequency (RF) interface, configured to provide, to a radio frequency (RF) circuitry, the physical channel configuration signal, for subsequent transmission to the UE.

2. The apparatus of clause 1, wherein the CRS-to-DMRS antenna port mapping is configured based on one or more precoding matrices associated with a predefined codebook, and wherein the one or more mapping information parameters comprises an index parameter comprising a precoding matrix index (PMI) associated with the predefined codebook, wherein the PMI identifies a respective precoding matrix from the predefined codebook.

3. The apparatus of clause 2, wherein, in order to enable frequency domain diversity and/or time domain diversity, the one or more mapping information parameters further comprises a switching pattern parameter indicative of a PMI switching pattern based on which the PMI associated with the predefined codebook is varied among a set of PMIs associated with the predefined codebook, as a function of frequency and/or time of the MPDCCH, respectively.

4. The apparatus of clause 3, wherein, in order to enable frequency domain/time domain diversity, the one or more mapping information parameters further comprises an interval parameter indicative of intervals in frequency and/or periods in time, based on which the PMI associated with the predefined codebook is varied, in accordance with the PMI switching pattern.

5. The apparatus of clause 3, wherein the one or more mapping information parameters further comprises a PMI restriction parameter that restricts the PMIs within the set of PMIs associated with the predefined codebook among which the PMI is varied as a function of frequency or time, to less than all the PMIs associated with the predefined codebook.

6. The apparatus of clause 1, wherein, when the number of CRS antenna ports and the number of DMRS antenna ports associated with the MPDCCH are equal, the CRS-to-DMRS antenna port mapping comprises a one-to-one antenna port mapping, and wherein the one or more mapping information parameters comprises a mapping parameter indicative of the one-to-one antenna port mapping between the CRS antenna ports and DMRS antenna ports for the MPDCCH.

7. The apparatus of clause 6, wherein a precoding method associated with the MPDCCH comprises space frequency block coding (SFBC)/switched Tx diversity, and wherein the physical channel configuration signal further comprises a precoding parameter indicative of the (SFBC)/switched Tx diversity precoding method associated with the MPDCCH, in order to enable the UE to perform coherent demodulation of the MPDCCH based on the CRS and the DMRS.

8. The apparatus of any of the clauses 1-7, wherein the physical channel configuration signal further comprises one or more power offset parameters indicative of a power offset between the CRS antenna ports and the DMRS antenna ports of the MPDCCH.

9. The apparatus of any of the clauses 1-7, wherein the CRS-to-DMRS antenna port mapping, comprises a first mapping between the CRS antenna ports and the DMRS antenna ports configured for common search space (CSS) of the MPDCCH, and a second mapping between the CRS antenna ports and the DMRS antenna ports configured for UE-specific search spaces (UESS) of the MPDCCH.

10. The apparatus of clause 9, wherein the physical channel configuration signal comprises a common physical channel configuration signal comprising one or more mapping information parameters indicative of the first mapping for the CSS of the MPDCCH, and a UE-specific physical channel configuration signal comprising one or more mapping information parameters indicative of the second mapping for the UESS of the MPDCCH.

11. The apparatus of clause 9, wherein the first mapping for the CSS of the MPDCCH comprises one or more mapping configured for one or more CSS types, respectively, associated with the MPDCCH.

12. The apparatus of any of the clauses 1-7, wherein the CRS-to-DMRS antenna port mapping is configured as a function of narrowband associated therewith.

13. The apparatus of any of the clauses 1-7, wherein the CRS-to-DMRS antenna port mapping is configured as a function of a coverage enhancement (CE) mode in which the MDPCCH is monitored for a given search space associated therewith.

14. The apparatus of any of the clauses 1-7, wherein the CRS-to-DMRS antenna port mapping is configured as a function of radio network temporary identifier (RNTI).

15. The apparatus of any of the clauses 1-7, wherein the CRS-to-DMRS antenna port mapping comprises UE-specific mapping that is configured specifically for the UE, and wherein the physical channel configuration signal comprises a UE-specific signal.

16. An apparatus configured to be employed in a user equipment (UE) associated with a machine type communication (MTC) system, comprising: one or more processors configured to: process a physical channel configuration signal, received from an eNodeB associated therewith, wherein the physical channel configuration signal comprises one or more mapping information parameters indicative of a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping; determine the CRS-to-DMRS antenna port mapping, based on processing the physical channel configuration signal; and perform coherent demodulation of the MPDCCH, based on CRS and DMRS, in accordance with the determined CRS-to-DMRS antenna port mapping.

17. The apparatus of clause 16, wherein the CRS-to-DMRS antenna port mapping is based on one or more precoding matrices associated with a predefined codebook, and wherein the one or more mapping information parameters comprises an index parameter comprising a precoding matrix index (PMI) associated with the predefined codebook, wherein the precoding matrix index identifies a respective precoding matrix from the predefined codebook.

18. The apparatus of clause 17, wherein, in order to enable frequency domain diversity and/or time domain diversity, the one or more mapping information parameters further comprises a switching pattern parameter indicative of a PMI switching pattern based on which the PMI associated the predefined codebook is varied among a set of PMIs associated with the predefined codebook, as a function of frequency and/or time of the MPDCCH, respectively.

19. The apparatus of clause 16, wherein, when the number of CRS antenna ports and the number of DMRS antenna ports associated with the MPDCCH are equal, the CRS-to-DMRS antenna port mapping comprises a one-to-one antenna port mapping, and wherein the one or more mapping information parameters comprises a mapping parameter indicative of the one-to-one antenna port mapping between the CRS antenna ports and DMRS antenna ports for the MPDCCH.

20. The apparatus of clause 19, wherein a precoding method associated with the MPDCCH comprises space frequency block coding (SFBC)/switched Tx diversity, and wherein the physical channel configuration signal further comprises a precoding parameter indicative of the (SFBC)/switched Tx diversity precoding method associated with the MPDCCH, in order to enable the UE to perform coherent demodulation of the MPDCCH based on the CRS and the DMRS.

21. The apparatus of any of the clauses 16-20, wherein the physical channel configuration signal further comprises one or more power offset parameters indicative of a power offset between the CRS antenna ports and the DMRS antenna ports associated with the MPDCCH.

22. The apparatus of any of the clauses 16-20, wherein the one or more processors is further configured to provide a UE capability signal comprising an indication regarding a capability of the UE to perform coherent demodulation of the MPDCCH jointly based on the CRS and the DMRS, to the eNodeB, via a radio frequency (RF) circuitry, prior to processing the physical channel configuration signal.

23. A computer readable storage device storing executable instructions that, in response to execution, cause one or more processors of an eNodeB to perform operations, the operations comprising: configuring a mapping between cell-specific reference signal (CRS) antenna ports and demodulation reference signals (DMRS) antenna ports for an MTC physical downlink control channel (MPDCCH) associated with a UE, forming a CRS-to-DMRS antenna port mapping, to be provided to the UE, in order to enable the UE to perform coherent demodulation of the MPDCCH based on CRS and DMRS; generating a physical channel configuration signal comprising one or more mapping information parameters indicative of the CRS-to-DMRS antenna port mapping, in order to provide information on the CRS-to-DMRS antenna port mapping to the UE; and providing the physical channel configuration signal, to a radio frequency (RF) circuitry, for subsequent transmission to the UE.

24. The computer readable storage device of clause 23, wherein the CRS-to-DMRS antenna port mapping is configured based on one or more precoding matrices associated with a predefined codebook, and wherein the one or more mapping information parameters comprises an index parameter comprising a precoding matrix index (PMI) associated with the predefined codebook, wherein the PMI identifies a respective precoding matrix from the predefined codebook.

25. The computer readable storage device of clause 23, wherein, when the number of CRS antenna ports and the number of DMRS antenna ports associated with the MPDCCH are equal, the CRS-to-DMRS antenna port mapping comprises a one-to-one antenna port mapping, and wherein the one or more mapping information parameters comprises a mapping parameter indicative of the one-to-one antenna port mapping between the CRS antenna ports and DMRS antenna ports.

**Claims**

1. A method to be performed by an eNodeB, the method comprising:

   configuring a relation between cell-specific reference signal (CRS) antenna ports and demodulation reference signals (DMRS) antenna ports for an MTC physical downlink control channel (MPDCCH) to be provided to a UE; generating information indicative of the relation between the CRS antenna ports and the DMRS antenna ports to provide information on the relation to the UE, wherein the information is configured to be provided to the UE via system information (SI) messaging or radio resource control (RRC) protocol messaging; wherein the relation between the CRS antenna ports and the DMRS antenna ports is based on one or more precoding matrices of one or more codebooks, wherein the one or more codebooks further include one or more indices that identify respective precoding matrices based on a number of layers.

2. The method of claim 1, wherein:

when the number of CRS antenna ports is less than or equal to two, the relation between the CRS antenna ports and the DMRS antenna ports is based on one or more precoding matrices of a first codebook; and
when the number of CRS antenna ports is greater than two and less than or equal to four, the relation between the CRS antenna ports and the DMRS antenna ports is based on one or more precoding matrices of a second codebook, different to the first codebook.

3. The method of claim 2, wherein the first codebook is as specified in Table 6.3.4.2.3-1 of the E-UTRA technical specification TS 36.211 and the second codebook is as specified in Table 6.3.4.2.3-2 of the E-UTRA technical specification TS 36.211.

4. The method of claim 2 or claim 3, wherein the first codebook is defined according to the table:

| Codebook index | Number of layers $\upsilon$ | |
|---|---|---|
| | 1 | 2 |
| 0 | $\frac{1}{\sqrt{2}}\begin{bmatrix}1\\1\end{bmatrix}$ | $\frac{1}{\sqrt{2}}\begin{bmatrix}1 & 0\\0 & 1\end{bmatrix}$ |
| 1 | $\frac{1}{\sqrt{2}}\begin{bmatrix}1\\-1\end{bmatrix}$ | $\frac{1}{2}\begin{bmatrix}1 & 1\\1 & -1\end{bmatrix}$ |
| 2 | $\frac{1}{\sqrt{2}}\begin{bmatrix}1\\j\end{bmatrix}$ | $\frac{1}{2}\begin{bmatrix}1 & 1\\j & -j\end{bmatrix}$ |
| 3 | $\frac{1}{\sqrt{2}}\begin{bmatrix}1\\-j\end{bmatrix}$ | - |

5. The method of any one of claims 2 to 4, wherein the second codebook is defined according to the table:

| Codebook index | $u_n$ | Number of layers $\upsilon$ | | | |
|---|---|---|---|---|---|
| | | 1 | 2 | 3 | 4 |
| 0 | $u_0=[1\ \text{-}1\ \text{-}1\ \text{-}1]^T$ | $W_0^{\{1\}}$ | $W_0^{\{14\}}/\sqrt{2}$ | $W_0^{\{124\}}/\sqrt{3}$ | $W_0^{\{1234\}}/2$ |
| 1 | $u_1=[1\ \text{-}j\ 1\ j]^T$ | $W_1^{\{1\}}$ | $W_1^{\{12\}}/\sqrt{2}$ | $W_1^{\{123\}}/\sqrt{3}$ | $W_1^{\{1234\}}/2$ |
| 2 | $u_2=[1\ 1\ \text{-}1\ 1]^T$ | $W_2^{\{1\}}$ | $W_2^{\{12\}}/\sqrt{2}$ | $W_2^{\{123\}}/\sqrt{3}$ | $W_2^{\{3214\}}/2$ |
| 3 | $u_3=[1\ j\ 1\ \text{-}j]^T$ | $W_3^{\{1\}}$ | $W_3^{\{12\}}/\sqrt{2}$ | $W_3^{\{123\}}/\sqrt{3}$ | $W_3^{\{3214\}}/2$ |
| 4 | $u_4=\left[1\ \ (\text{-}1\text{-}j)/\sqrt{2}\ \ \text{-}j\ \ (1\text{-}j)/\sqrt{2}\right]^T$ | $W_4^{\{1\}}$ | $W_4^{\{14\}}/\sqrt{2}$ | $W_4^{\{124\}}/\sqrt{3}$ | $W_4^{\{1234\}}/2$ |
| 5 | $u_5=\left[1\ \ (1\text{-}j)/\sqrt{2}\ \ j\ \ (\text{-}1\text{-}j)/\sqrt{2}\right]^T$ | $W_5^{\{1\}}$ | $W_5^{\{14\}}/\sqrt{2}$ | $W_5^{\{124\}}/\sqrt{3}$ | $W_5^{\{1234\}}/2$ |
| 6 | $u_6=\left[1\ \ (1+j)/\sqrt{2}\ \ \text{-}j\ \ (\text{-}1+j)/\sqrt{2}\right]^T$ | $W_6^{\{1\}}$ | $W_6^{\{13\}}/\sqrt{2}$ | $W_6^{\{134\}}/\sqrt{3}$ | $W_6^{\{1324\}}/2$ |
| 7 | $u_7=\left[1\ \ (\text{-}1+j)/\sqrt{2}\ \ j\ \ (1+j)/\sqrt{2}\right]^T$ | $W_7^{\{1\}}$ | $W_7^{\{13\}}/\sqrt{2}$ | $W_7^{\{134\}}/\sqrt{3}$ | $W_7^{\{1324\}}/2$ |
| 8 | $u_8=[1\ \text{-}1\ 1\ 1]^T$ | $W_8^{\{1\}}$ | $W_8^{\{12\}}/\sqrt{2}$ | $W_8^{\{124\}}/\sqrt{3}$ | $W_8^{\{1234\}}/2$ |
| 9 | $u_9=[1\ \text{-}j\ \text{-}1\ j]^T$ | $W_9^{\{1\}}$ | $W_9^{\{14\}}/\sqrt{2}$ | $W_9^{\{134\}}/\sqrt{3}$ | $W_9^{\{1234\}}/2$ |
| 10 | $u_{10}=[1\ 1\ 1\ \text{-}1]^T$ | $W_{10}^{\{1\}}$ | $W_{10}^{\{13\}}/\sqrt{2}$ | $W_{10}^{\{123\}}/\sqrt{3}$ | $W_{10}^{\{1324\}}/2$ |

| Codebook index | $u_n$ | Number of layers $\upsilon$ | | | |
|---|---|---|---|---|---|
| | | 1 | 2 | 3 | 4 |
| 11 | $u_{11} = [1\ j\ -1\ j]^T$ | $W_{11}^{\{1\}}$ | $W_{11}^{\{13\}}/\sqrt{2}$ | $W_{11}^{\{134\}}/\sqrt{3}$ | $W_{11}^{\{1324\}}/2$ |
| 12 | $u_{12} = [1\ -1\ -1\ 1]^T$ | $W_{12}^{\{1\}}$ | $W_{12}^{\{12\}}/\sqrt{2}$ | $W_{12}^{\{123\}}/\sqrt{3}$ | $W_{12}^{\{1234\}}/2$ |
| 13 | $u_{13} = [1\ -1\ 1\ -1]^T$ | $W_{13}^{\{1\}}$ | $W_{13}^{\{13\}}/\sqrt{2}$ | $W_{13}^{\{123\}}/\sqrt{3}$ | $W_{13}^{\{1324\}}/2$ |
| 14 | $u_{14} = [1\ 1\ -1\ -1]^T$ | $W_{14}^{\{1\}}$ | $W_{14}^{\{13\}}/\sqrt{2}$ | $W_{14}^{\{123\}}/\sqrt{3}$ | $W_{14}^{\{3214\}}/2$ |
| 15 | $u_{15} = [1\ 1\ 1\ 1]^T$ | $W_{15}^{\{1\}}$ | $W_{15}^{\{12\}}/\sqrt{2}$ | $W_{15}^{\{123\}}/\sqrt{3}$ | $W_{15}^{\{1234\}}/2$ |

6. The method of any one of claims 1 to 5, wherein a respective index identifying the precoding matrix on which the relation between the CRS antenna ports and the DMRS antenna ports is based is varied as a function of frequency and/or time of the MPDCCH.

7. The method of claim 6, wherein the respective index identifying the precoding matrix is varied as a function of frequency based on an interval parameter provided to the UE.

8. The method of any preceding claim, wherein the precoding matrix on which the relation between the CRS antenna ports and the DMRS antenna ports is based is varied as a function of frequency and/or time based on a restriction parameter that restricts the precoding matrix within a subset of the precoding matrices of a respective codebook.

9. A computer readable storage device storing executable instructions that, in response to execution, cause one or more processors of an eNodeB to perform the method of any one of claims 1 to 8.

10. An apparatus configured to be employed in an eNodeB associated with a machine type communication, MTC, system, comprising:
one or more processors configured to perform the method of any one of claims 1 to 8.

11. A method to be performed by a UE, the method comprising:

processing information, received from an eNodeB associated therewith, wherein the information comprises information indicative of a relation between cell-specific reference signal (CRS) antenna ports and demodulation reference signals (DMRS) antenna ports for an MTC physical downlink control channel (MPDCCH); wherein the relation between the CRS antenna ports and the DMRS antenna ports is based on one or more precoding matrices of one or more codebooks, wherein the one or more codebooks further include one or more indices that identify respective precoding matrices based on a number of layers;

determining the CRS-to-DMRS antenna port mapping, based on processing the information; and performing coherent demodulation of the MPDCCH, based on CRS and DMRS, in accordance with the determined CRS-to-DMRS antenna port mapping.

12. The method of claim 11, wherein:

when the number of CRS antenna ports is less than or equal to two, the relation between the CRS antenna ports and the DMRS antenna ports is based on one or more precoding matrices of a first codebook; and when the number of CRS antenna ports is greater than two and less than or equal to four, the relation between the CRS antenna ports and the DMRS antenna ports is based on one or more precoding matrices of a second codebook, different to the first codebook.

13. The method of claim 11 or claim 12, wherein a respective index identifying the precoding matrix on which the relation between the CRS antenna ports and the DMRS antenna ports is based is varied as a function of frequency and/or time of the MPDCCH, respectively.

14. A computer readable storage device storing executable instructions that, in response to execution, cause one or more processors of a UE to perform the method of any one of claims 11 to 13.

15. An apparatus configured to be employed in a UE associated with a machine type communication, MTC, system, comprising:
one or more processors configured to perform the method of any one of claims 11 to 13.

FIG. 1

EP 4 362 406 A2

200

210

PROCESSOR(S)

220

TRANSCEIVER CIRCUITRY

To antenna(s)

230

MEMORY

**FIG. 2**

300

310

PROCESSOR(S)

320

COMMUNICATION (e.g., TRANSCEIVER, ETC.) CIRCUITRY

To antenna(s) and/or wired connection(s)

330

MEMORY

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62717661